# EUROPEAN PATENT SPECIFICATION

(11) **EP 3 118 243 B1**
(45) Date of publication and mention of the grant of the patent: **26.08.2020**
(21) Application number: 15761092.4
(22) Date of filing: 10.03.2015
(51) Int. Cl.: C08G 79/00, B01J 35/02, B82Y 30/00, B82Y 40/00, C01B 33/12, C08G 77/58, C09C 1/36, C09C 3/08, B01J 27/135, B01J 31/02, B01J 31/12, B01J 35/00

(54) **FLUORINE-CONTAINING TITANIUM OXIDE-NANOSILICA COMPOSITE PARTICLES, AND METHOD FOR PRODUCING SAME**
FLUORINHALTIGE TITANOXID-NANOKIESELSÄURE-VERBUNDPARTIKEL UND VERFAHREN ZUR HERSTELLUNG DAVON
PARTICULES COMPOSITES D'OXYDE DE TITANE-NANOSILICE CONTENANT DU FLUOR ET LEUR PROCÉDÉ DE PRODUCTION

(30) Priority: 11.03.2014 JP 2014047315
(43) Date of publication of application: 18.01.2017
(60) Divisional application: 20158060.2
(73) Proprietor: Unimatec Co., Ltd., Tokyo 105-0012 (JP); Hirosaki University, Hirosaki-shi, Aomori 036-8224 (JP)
(72) Inventor: FUKUSHIMA Takeshi, Kitaibaraki-shi Ibaraki 319-1544 (JP); SATO Katsuyuki, Kitaibaraki-shi Ibaraki 319-1544 (JP); SAWADA Hideo, Hirosaki-shi Aomori 036-8224 (JP)
(74) Representative: Beckmann, Claus
(86) International application number: PCT/JP2015/057024
(87) International publication number: WO 2015/137345

(56) References cited:
- JP-A- H07 112 126
- JP-A- 2000 169 481
- JP-A- 2004 231 952
- JP-A- 2009 227 880
- JP-A- 2009 227 880
- JP-A- 2011 020 023
- JP-A- 2011 207 628
- US-A- 5 593 483
- US-A1- 2010 324 205
- US-A1- 2014 023 855

## Description

### TECHNICAL FIELD

The present invention relates to fluorine-containing titanium oxide - nano-silica composite particles and a method for producing the same. More particularly, the present invention relates to fluorine-containing titanium oxide - nano-silica composite particles using an easy-to-handle fluorine-containing alcohol, and a method for producing the same.

### BACKGROUND ART

When an anatase type titanium oxide, which is used as a photocatalyst, is heated at a high temperature, its crystal structure changes to a rutile type structure, which has significantly reduced catalytic activity. Accordingly, it is known that the transition of the crystal structure to a rutile type structure can be suppressed by subjecting a titanium oxide to surface modification or fluorination.

Although the transition of the crystal structure due to heating can be suppressed by surface modification, the contact efficiency with the titanium oxide decreases, and a reduction of catalytic activity is thus unavoidable. In a fluorination treatment (Patent Document 1), hydrogen fluoride is used as a fluorine source, which requires special equipment that is resistant to hydrogen fluoride.

Patent Document 2 discloses a liquid, fluorine-containing and single-component composition for the permanent oil- and water-repellent surface treatment of porous and nonporous substrates, wherein the composition comprises a suitable stabilizing component and a hydrophilic silane component in combination, and has excellent storage stability, and hydrophobic, oleophobic and dust proof properties.

However, in the preparation of a surface-treating agent for mineral and non-mineral substrates, a highly toxic isocyanate compound is used to introduce a silyl group into a fluorine compound. Therefore, its implementation requires the regulation of the production environment.

It is known that various surface characteristics are developed by coating inorganic material surfaces with various compounds or polymers. In particular, when a fluorine-based compound is used for surface treatment, surface modification can be applied for not only water-repellency, but also oil-repellency, due to properties of fluorine atoms. Thus, such fluorine-based compounds are used for coating on various substrates.

In particular, highly water- and oil-repellent coatings can be obtained by applying a surface-treating agent having a C₈ perfluoroalkyl group to substrates. However, it is recently reported that compounds containing a perfluoroalkyl group having 7 or more carbon atoms induce intracellular communication inhibition, which is considered to be a carcinogenic factor, in *in-vitro* tests using cell strains; that this inhibition depends on the length of the fluorinated carbon chain, rather than the functional groups; and that a longer carbon chain has higher inhibitory actively. The production of monomers using fluorinated long-carbon-chain compounds has been restricted.

Patent Documents 3 and 4 indicate that a fluorine-containing alcohol, an alkoxysilane (and a polymerizable functional group-containing alcohol) are subjected to a condensation reaction. However, the resulting alkoxysilane derivatives are used for the preparation of a curable composition to which a photoacid generator or photobase generator is added, or for the preparation of an inorganic conductive coating composition. US 5,593,483 discloses solvent based water repellent compositions.

### PRIOR ART DOCUMENTS

### PATENT DOCUMENTS

Patent Document 1 : JP-A-2010-073914
Patent Document 2 : JP-A-2011-511113
Patent Document 3 : JP-A-2004-285111
Patent Document 4 : JP-A-5-186719
Patent Document 5 : JP-B-4674604
Patent Document 6 : WO 2007/080949 A1
Patent Document 7 : JP-A-2008-38015
Patent Document 8 : U.S. Pat. No. 3,574,770

### OUTLINE OF THE INVENTION

### PROBLEM TO BE SOLVED BY THE INVENTION

An object of the present invention is to provide fluorine-containing titanium oxide - nano-silica composite particles that do not have difficulty in handling as with hydrogen fluoride, that do not produce perfluorooctanoic acid and the like even when released into the environment, that have units easily degradable to short-chain compounds, that can be produced by using a fluorine-containing alcohol, which can be easily handled, and that can produce a product capable of suppressing a decrease in the function of the titanium oxide as a photocatalyst even when subjected to a high-temperature heat treatment, and to provide a method for producing the same.

### MEANS FOR SOLVING THE PROBLEM

The present invention provides fluorine-containing titanium oxide - nano-silica composite particles comprising a condensate of a fluorine-containing alcohol and an alkoxysilane, and titanium oxide and nano-silica particles, wherein the fluorine-containing alcohol is represented by the general formula:

R_{F}'-A-OH [Ia]

or the general formula:

HO-A-R_{F}"-A-OH [Ib]

wherein R_{F}' is a linear or branched perfluoroalkyl group containing a terminal perfluoroalkyl group having 6 or less carbon atoms and a perfluoroalkylene group having 6 or less carbon atoms, and containing an O, S or N atom; R_{F}" is a linear or branched perfluoroalkylene group containing a perfluoroalkylene group having 6 or less carbon atoms, and containing an O, S or N atom; and A is an alkylene group having 1 to 6 carbon atoms. The number of carbon atoms is preferably 4 to 6.

The fluorine-containing titanium oxide - nano-silica composite particles are produced by a method comprising subjecting the above fluorine-containing alcohol [Ia] or [Ib] and an alkoxysilane to a condensation reaction in the presence of titanium oxide and nano-silica particles using an alkaline or acidic catalyst. The obtained fluorine-containing titanium oxide - nano-silica composite particles are used as an active ingredient of surface-treating agents, such as water- and oil-repellents.

### EFFECT OF THE INVENTION

In the fluorine-containing alcohols used in the present invention, the carbon number of the terminal perfluoroalkyl group or the perfluoroalkylene chain in a polyfluoroalkyl group is 6 or less, and units easily degradable to short-chain fluorine-containing compounds having 6 or less carbon atoms are contained. Therefore, the fluorine-containing alcohols do not lead to environmental pollution.

The fluorine-containing titanium oxide - nano-silica composite particles obtained by allowing titanium oxide and organo nano-silica particles to coexist during the condensation reaction with a fluorine-containing alcohol and an alkoxysilane are a novel fluorine-containing compound. Due to the fluorine atom contained therein, the fluorine-containing titanium oxide - nano-silica composite particles can prevent a decrease in function as a photocatalyst even when subjected to a high-temperature heat treatment up to 1,000°C. Furthermore, titanium oxide incorporating a fluorine atom has improved photocatalyst activity compared with the raw material titanium oxide.

### EMBODIMENTS FOR CARRYING OUT THE INVENTION

The fluorine-containing alcohol [Ia] is a fluorine-containing alcohol wherein the R_{F}' group is a linear or branched perfluoroalkyl group containing a terminal perfluoroalkyl group having 6 or less carbon atoms and a perfluoroalkylene group having 6 or less carbon atoms, and containing an O, S or N atom, specifically, a perfluoroalkyl group having 3 to 305 carbon atoms, preferably 8 to 35 carbon atoms, and containing O, S or N atom, and A is an alkylene group having 1 to 3 carbon atoms, preferably 1 carbon atom. Examples thereof, for example, include a hexafluoropropene oxide oligomer alcohol represented by the general formula:

CₘF₂ₘ₊₁O[CF(CF₃)CF₂O]_{d}CF(CF₃)(CH₂)ₑOH [IIa]

m: 1 to 3, preferably 3
d: 0 to 100, preferably 1 to 10
e: 1 to 3, preferably 1

Moreover, the fluorine-containing alcohol [Ib] may be a fluorine-containing alcohol wherein the R_{F}" group contains a linear or branched perfluoroalkylene group having 6 or less carbon atoms, and containing O, S or N atom, specifically, a perfluoroalkylene group having 5 to 160 carbon atoms, and containing O, S or N atom, and A is an alkylene group having 1 to 3 carbon atoms, preferably 1 carbon atom. Examples thereof, for example, include a perfluoroalkylene ether diol represented by the general formula:

HO(CH₂)_{f}CF(CF₃)[OCF₂CF(CF₃)]_{g}O(CF₂)ₕO[CF(CF₃)CF₂O]ᵢCF(CF₃)(CH₂)_{f}OH [IIb]

f: 1 to 3, preferably 1
g+i: 0 to 50, preferably 2 to 50
h: 1 to 6, preferably 2

Among the hexafluoropropene oxide oligomer alcohols represented by the general formula [IIa], a compound wherein m=1 and e=1 is described in Patent Document 6, and they are synthesized through the following step.

A fluorine-containing ether carboxylic acid alkyl ester represented by the general formula: CF₃O[CF(CF₃)CF₂O]ₙCF(CF₃)COOR (R: an alkyl group, n: an integer of 0 to 12) is subjected to a reduction reaction using a reducing agent such as sodium boron hydride.

Moreover, among the perfluoroalkylene ether diols represented by the general formula [IIb], a compound wherein f = 1 is disclosed in Patent Documents 7 and 8, and they are synthesized via the following series of steps:

FOCRfCOF→H₃COOCRfCOOCH₃→HOCH₂RfCH₂OH

Rf:-CF(CF₃)[OCF₂C(CF₃)]ₐO(CF₂)_{c}O[CF(CF₃)CF₂O]_{b}CF(CF₃)-

Such a fluorine-containing alcohol and an alkoxysilane are reacted in the presence of an alkaline or acidic catalyst, preferably an aqueous ammonia catalyst, thereby forming fluorine-containing nano-composite particles. The aqueous ammonia catalyst is used at a weight ratio of about 0.2 to 2.0 based on the total amount of titanium oxide, nano-silica, and alkoxysilane.

The alkoxysilane is represented by the general formula:

(R₁O)ₚSi(OR₂)_{q}(R₃)ᵣ [IV]

R₁, R₃ : H, C₁-C₆ alkyl group or aryl group
R₂: C₁-C₆ alkyl group or aryl group,
with the proviso that not all of R₁, R₂ and R₃ are aryl groups; and p+q+r is 4, with the proviso that q is not 0, and examples thereof include trimethoxysilane, triethoxysilane, triethoxymethylsilane, triethoxymethylsilane, trimethoxyphenylsilane, triethoxyphenylsilane, tetramethoxysilane, tetraethoxysilane, and the like.

The reaction between these components is performed in the presence of an alkaline or acid catalyst, such as aqueous ammonia, an aqueous solution of a hydroxide of an alkali metal or alkaline earth metal (e.g., sodium hydroxide, potassium hydroxide, or calcium hydroxide), hydrochloric acid, or sulfuric acid, at a temperature of about 0 to 100°C, preferably about 10 to 30°C, for about 0.5 to 48 hours, preferably about 1 to 10 hours.

The amount of fluorine-containing alcohol in the obtained fluorine-containing nano-composite particles is about 1 to 50 mol%, preferably about 5 to 30 mol%. The composite particle size (measured by a dynamic light scattering method) is about 20 to 200 nm.

In the production of such a fluorine-containing nano-composite, when a condensation reaction is performed by making organonano-silica particles and titanium oxide coexist in the reaction system, fluorine-containing titanium oxide - nano-silica composite particles forming a condensate comprising four components, i.e., a fluorine-containing alcohol, an alkoxysilane, titanium oxide, and nano-silica particles can be produced.

As the titanium oxide, an anatase type titanium oxide is used for a photocatalyst. Since the product of the present invention is used as a surface-treating agent, a surface modifier, a flame retardant, a coating compounding agent, a rein compounding agent, a rubber compounding agent, and the like, various titanium oxides corresponding to respective applications are used.

As the nano-silica particles, organosilica sol having an average particle diameter (measured by a dynamic light scattering method) of 5 to 200 nm, preferably 10 to 100 nm, and having a primary particle diameter of 40 nm or less, preferably 5 to 30 nm, more preferably 10 to 20 nm, is used. Practically used are commercial products of Nissan Chemical Industries, Ltd., such as Methanol Silica Sol, Snowtex IPA-ST (isopropyl alcohol dispersion), Snowtex EG-ST (ethylene glycol dispersion), Snowtex MEK-ST (methyl ethyl ketone dispersion), and Snowtex MIBK-ST (methyl isobutyl ketone dispersion).

These components are used at the following ratio: about 10 to 200 parts by weight, preferably about 50 to 150 parts by weight, of nano-silica particles, about 10 to 200 parts by weight, preferably about 50 to 150 parts by weight, of fluorine-containing alcohol, and about 10 to 200 parts by weight, preferably about 50 to 150 parts by weight, of alkoxysilane are used based on 100 parts by weight of titanium oxide particles.

When the amount of nano-silica particles used is less than this range, the crystal structure of the titanium oxide cannot be sufficiently maintained due to the heat treatment, thereby reducing optical activity. In contrast, when the amount of nano-silica particles used is greater than this range, the surface of the titanium oxide particles is overly covered with silica, thereby reducing optical activity. When the amount of fluorine-containing alcohol used is less than this range, water- and oil-repellency decreases. In contrast, when the amount of fluorine-containing alcohol used is greater than this range, dispersibility in a solvent decreases. Moreover, when the amount of alkoxysilane used is less than this range, dispersibility in a solvent decreases. In contrast, when the amount of alkoxysilane used is greater than this range, water- and oil-repellency decreases.

In the fluorine-containing titanium oxide - nano-silica composite particles obtained as a reaction product, it is considered that the fluorine-containing alcohol is linked to a hydroxyl group on the surface of the nano-silica particles via a siloxane bond as a spacer. Therefore, the chemical and thermal stability of silica, and the excellent water- and oil-repellency, antifouling properties, and the like of fluorine are effectively exhibited. In fact, a glass surface treated with the fluorine-containing titanium oxide - nano-silica composite particles exhibits excellent water- and oil-repellency, and also has the effect of, for example, reducing the weight loss at 1000°C. Moreover, the particle size of the fluorine-containing titanium oxide - nano-silica composite particles, and the variation of the particle size show small values. The fluorine-containing titanium oxide - nano-silica composite particles are formed as a reaction product of a fluorine-containing alcohol and an alkoxysilane, and titanium oxide and nano-silica particles; however, other components are allowed to be mixed as long as the object of the present invention is not impaired.

### EXAMPLES

The following describes Examples.

### Example 1

CF₃(CF₂)₅(CH₂)₂OH [FA-6] 250mg (0.69 mmol) was added and dissolved in 30 ml of methanol. To the resulting solution, 250mg of anatase type titanium oxide and 834mg (250mg as nano-silica) of silica sol (Methanol Silica Sol, a product of Nissan Chemical Industries, Ltd.; nano-silica content: 30 wt.%, average particle diameter: 11 nm) and 0.25 ml (1.13 mmol) of tetraethoxysilane (a product of Tokyo Chemical Industry Co., Ltd.; density: 0.93 g/ml) were added. While stirring the mixture with a magnetic stirrer, 0.5 ml of 25 wt.% aqueous ammonia was added, and the mixture was reacted for 5 hours.

After completion of the reaction, the methanol and aqueous ammonia were removed using an evaporator under reduced pressure, and the resulting powder was redispersed in approximately 10 ml of methanol overnight. The next day, centrifugation was performed using a centrifuge tube, the supernatant was removed, and fresh methanol was added to perform rinsing. After rinsing was performed 3 times, the opening of the centrifuge tube was covered with aluminum foil, and the tube was placed in an oven at 70°C overnight. The next day, the tube was placed and dried in a vacuum dryer at 50°C overnight, thereby obtaining 537mg (yield: 73%) of white powder.

The particle size of the obtained white powdery fluorine-containing titanium oxide - nano-silica composite particles, and the variation of the particle size were measured in a methanol dispersion having a solid matters content of 1 g/L at 25°C by a dynamic light scattering (DLS) measurement method. Further, thermogravimetric analysis (TGA) was performed before and after the calcining of 1000°C. The heating rate in this case was 10°C/min. The particle diameter after calcining is an average value of two values, except for Example 1. Moreover, the percentage of the weight loss due to calcining with respect to the initial weight was also calculated.

### Examples 2 to 7, Reference Examples 1 to 2

In Example 1, the same amount (250 mg) of various fluorine-containing alcohols were used in place of FA-6.
FA-8: CF₃(CF₂)₇(CH₂)₂OH
DTFA: CF₃(CF₂)₃CH₂(CF₂)₅(CH₂)₂OH
   [CF₃(CF₂)₃(CH₂CF₂)(CF₂CF₂)₂(CH₂CH₂)OH)]
PO-6-OH: HOCH₂CF(CF₃)[OCF₂CF(CF₃)]ₙOCF₂CF₂O[CF(CF₃)CF₂O]ₘ
   CF(CF₃)CH₂OH (n+m=6)
PO-9M-OH: HOCH₂CF(CF₃)[OCF₂CF(CF₃)]ₙOCF₂CF₂O[CF(CF₃)CF₂O]ₘ
   CF(CF₃)CH₂OH (n+m=9)

The results of the foregoing individual Examples and Reference Examples are shown in the following Table 1.

**Table 1**

| | Fluorine-containing Alcohol | | | | Fluorine-containing TiO₂-SiO₂ composite particle size (nm) | | |
|---|---|---|---|---|---|---|---|
| Ex. | Abbreviation | mM | Recovery amount (mg) | Yield (%) | Before Calcining | After calcining of 1000°C | Loss Weight (%) |
| Ex.1 | FA-6 | 0.69 | 537 | 73 | 22.5± 5.4 | 22.4± 5.1 | 5 |
| Ref. Ex.1 | FA-8 | 0.54 | 507 | 69 | 78.4±11.3 | - | 4 |
| Ref. Ex.2 | FA-8 | 0.54 | 492 | 67 | 85.2±10.0 | 93.4±22.5 | 4 |
| Ex.2 | DTFA | 0.47 | 537 | 73 | 52.0± 7.2 | - | 5 |
| Ex.3 | DTFA | 0.47 | 529 | 72 | 27.7± 6.5 | 103.1±22.9 | 5 |
| Ex.4 | PO-6-OH | 0.26 | 515 | 70 | 25.6± 5.4 | - | 22 |
| Ex.5 | PO-6-OH | 0.26 | 537 | 73 | 26.6± 5.8 | 81.0±17.5 | 6 |
| Ex.6 | PO-9M-OH | 0.17 | 434 | 59 | 38.2±10.9 | - | 31 |
| Ex.7 | PO-9M-OH | 0.17 | 198 | 27 | 49.3±16.1 | 57.7±14.1 | 27 |

Moreover, the photocatalytic function of the obtained fluorine-containing titanium oxide - nano-silica composite particles was evaluated by a methylene blue degradation reaction in the following manner.

A methanol solution of 0.8 ml of methylene blue (concentration: 0.01 g/cm³) and a methanol solution of 0.4 ml of composite particles (concentration: 0.20 g/cm³) were weighed and diluted with methanol so that the total solution was 3.2 ml of methanol solution. The prepared solution (weight ratio of methylene blue/composite particles = 1/10) was irradiated with ultraviolet ray having a wavelength of 365 nm for 20 minutes. Changes with time of the absorption peak (652 nm) of methylene blue in UV spectral measurement were plotted in a graph, thereby evaluating the function of the composite particles as a photocatalyst (degradation rate and evaluation based thereon). The function evaluation was conducted before and after the calcining of 1,000°C, and the results were evaluated in the following evaluation criteria.

### (Evaluation criteria)

⊚: The performances were improved compared with the anatase type titanium oxide
○: One of the performances was improved compared with the anatase type titanium oxide
Δ: The performances were equivalent compared with the anatase type titanium oxide
×: The performances were reduced compared with the anatase type titanium oxide

**Table 2**

| | Before calcining | | After calcining | |
|---|---|---|---|---|
| | Degradation rate | | Degradation rate | |
| Ex. | (%) | Evaluation | (%) | Evaluation |
| Ex.1 | 82 | ○ | 42 | ⊚ |
| Ref. Ex.1 | 82 | ⊚ | 69 | ⊚ |
| Ex.3 | 86 | ⊚ | 57 | ⊚ |
| Ex.5 | 80 | ⊚ | 75 | ⊚ |
| Ex.7 | 71 | Δ | 79 | ⊚ |

The degradation rate of the anatase type titanium oxide was 71% before the calcining and 10% after the calcining. The degradation rate of the anatase type titanium oxide/boric acid (weight ratio = 1:0.94) was 82% before the calcining and 31% after the calcining.

## Claims

1. Fluorine-containing titanium oxide - nano-silica composite particles comprising a condensate of a fluorine-containing alcohol and an alkoxysilane, and titanium oxide and nano-silica particles, wherein the fluorine-containing alcohol is represented by the general formula:
R_{F}'-A-OH [Ia]
or the general formula:
HO-A-R_{F}"-A-OH [Ib]
wherein R_{F}' is a linear or branched perfluoroalkyl group containing a terminal perfluoroalkyl group having 6 or less carbon atoms and a perfluoroalkylene group having 6 or less carbon atoms, and containing an O, S or N atom; R_{F}" is a linear or branched perfluoroalkylene group containing a perfluoroalkylene group having 6 or less carbon atoms, and containing an O, S or N atom; and A is an alkylene group having 1 to 6 carbon atoms.

2. The fluorine-containing titanium oxide - nano-silica composite particles according to claim 1, wherein the fluorine-containing alcohol represented by the general formula [Ia] is a hexafluoropropene oxide oligomer alcohol represented by the general formula:
CₘF₂ₘ₊₁O[CF(CF₃)CF₂O]_{d}CF(CF₃)(CH₂)ₑOH [IIa]
wherein m is an integer of 1 to 3, d is an integer of 0 to 100, and e is an integer of 1 to 3.

3. The fluorine-containing titanium oxide - nano-silica composite particles according to claim 1, wherein the fluorine-containing alcohol represented by the general formula [Ib] is a perfluoroalkylene ether diol represented by the general formula:
HO(CH₂)_{f}CF(CF₃)[OCF₂CF(CF₃)]_{g}O(CF₂)ₕO[CF(CF₃)CF₂O]ᵢCF(CF₃)(CH₂)_{f}OH [IIb]
wherein f is an integer of 1 to 3, g+i is an integer of 0 to 50, and h is an integer of 1 to 6.

4. The fluorine-containing titanium oxide - nano-silica composite particles according to claim 1, wherein the alkoxysilane is a silane derivative represented by the general formula:
(R₁O)ₚSi(OR₂)_{q}(R₃)ᵣ [IV]
wherein R₁ and R₃ are each a hydrogen atom, an alkyl group having 1 to 6 carbon atoms or an aryl group; R₂ is an alkyl group having 1 to 6 carbon atoms or an aryl group, with the proviso that not all of R₁, R₂ and R₃ are aryl groups; and p+q+r is 4, with the proviso that q is not 0.

5. The fluorine-containing titanium oxide - nano-silica composite particles according to claim 1, wherein 10 to 200 parts by weight of nano-silica particles, 10 to 200 parts by weight of fluorine-containing alcohol, and 10 to 200 parts by weight of alkoxysilane are used based on 100 parts by weight of titanium oxide.

6. The fluorine-containing titanium oxide - nano-silica composite particles according to claim 1, wherein 50 to 150 parts by weight of nano-silica particles, 50 to 150 parts by weight of fluorine-containing alcohol, and 50 to 150 parts by weight of alkoxysilane are used based on 100 parts by weight of titanium oxide.

7. A method for producing fluorine-containing titanium oxide - nano-silica composite particles according to claim the method comprising subjecting the fluorine-containing alcohol [Ia] or [Ib] according to claim 1 and an alkoxysilane to a condensation reaction in the presence of titanium oxide and nano-silica particles using an alkaline or acidic catalyst.

8. A surface-treating agent comprising the fluorine-containing titanium oxide - nano-silica composite particles according to claim 1 as an active ingredient.

## Patentansprüche

1. Fluorhaltige Titanoxid-Nano-Siliciumdioxid-Verbundpartikel, umfassend ein Kondensat aus einem fluorhaltigen Alkohol und einem Alkoxysilan und Titanoxid- und Nano-Siliciumdioxid-Partikel, wobei der fluorhaltige Alkohol durch die allgemeine Formel:
R_{F}'-A-OH [Ia]
oder die allgemeine Formel:
HO-A-R_{F}-A-OH [Ib]
dargestellt ist, wobei R_{F}' eine lineare oder verzweigte Perfluoralkylgruppe ist, die eine endständige Perfluoralkylgruppe mit 6 oder weniger Kohlenstoffatomen und eine Perfluoralkylengruppe mit 6 oder weniger Kohlenstoffatomen enthält und ein O-, S- oder N-Atom enthält; R_{F}" eine lineare oder verzweigte Perfluoralkylengruppe ist, die eine Perfluoralkylengruppe mit 6 oder weniger Kohlenstoffatomen enthält und ein O-, S- oder N-Atom enthält; und A eine Alkylengruppe mit 1 bis 6 Kohlenstoffatom(en) ist.

2. Fluorhaltige Titanoxid-Nano-Siliciumdioxid-Verbundpartikel nach Anspruch 1, wobei der fluorhaltige Alkohol, dargestellt durch die allgemeine Formel [Ia], ein Hexafluorpropenoxid-Oligomer-Alkohol ist, dargestellt durch die allgemeine Formel:
CₘF₂ₘ₊₁O(CF(CF₃)CF₂O]_{d}CF(CF₃)(CH₂)ₑOH [IIa],
wobei m eine ganze Zahl von 1 bis 3 ist, d eine ganze Zahl von 0 bis 100 ist und e eine ganze Zahl von 1 bis 3 ist.

3. Fluorhaltige Titanoxid-Nano-Siliciumdioxid-Verbundpartikel nach Anspruch 1, wobei der fluorhaltige Alkohol, dargestellt durch die allgemeine Formel [Ib], ein Perfluoralkylenetherdiol ist, dargestellt durch die allgemeine Formel:
HO(CH₂)_{f}CF(CF₃)[OCF₂CF(CF₃)]_{g}O(CF₂)ₕO[CF(CF₃)CF₂O]ᵢCF(CF₃)(CH₂)_{f}O H [IIb],
wobei f eine ganze Zahl von 1 bis 3 ist, g+i eine ganze Zahl von 0 bis 50 ist und h eine ganze Zahl von 1 bis 6 ist.

4. Fluorhaltige Titanoxid-Nano-Siliciumdioxid-Verbundpartikel nach Anspruch 1, wobei das Alkoxysilan ein Silanderivat ist, dargestellt durch die allgemeine Formel:
(R₁O)ₚSi(OR₂)_{q}(R₃)ᵣ [IV],
wobei R₁ und R₃ jeweils ein Wasserstoffatom, eine Alkylgruppe mit 1 bis 6 Kohlenstoffatom(en) oder eine Arylgruppe sind; R₂ eine Alkylgruppe mit 1 bis 6 Kohlenstoffatom(en) oder eine Arylgruppe ist, mit der Maßgabe, dass nicht alle von R₁, R₂ und R₃ Arylgruppen sind; und p+q+r 4 ist, mit der Maßgabe, das q nicht 0 ist.

5. Fluorhaltige Titanoxid-Nano-Siliciumdioxid-Verbundpartikel nach Anspruch 1, wobei 10 bis 200 Gewichtsteile Nano-Siliciumdioxid-Partikel, 10 bis 200 Gewichtsteile fluorhaltiger Alkohol und 10 bis 200 Gewichtsteile Alkoxysilan, bezogen auf 100 Gewichtsteile Titanoxid, verwendet werden.

6. Fluorhaltige Titanoxid-Nano-Siliciumdioxid-Verbundpartikel nach Anspruch 1, wobei 50 bis 150 Gewichtsteile Nano-Siliciumdioxid-Partikel, 50 bis 150 Gewichtsteile fluorhaltiger Alkohol und 50 bis 150 Gewichtsteile Alkoxysilan, bezogen auf 100 Gewichtsteile Titanoxid, verwendet werden.

7. Verfahren zur Herstellung von fluorhaltigen Titanoxid-Nano-Siliciumdioxid-Verbundpartikeln nach Anspruch 1, wobei das Verfahren das Unterwerfen des fluorhaltigen Alkohols [Ia] oder [Ib] nach Anspruch 1 und eines Alkoxysilans einer Kondensationsreaktion in Gegenwart von Titanoxid- und Nano-Siliciumdioxid-Partikeln unter Verwendung eines alkalischen oder sauren Katalysators umfasst.

8. Oberflächenbehandlungsmittel, umfassend die fluorhaltigen Titanoxid-Nano-Siliciumdioxid-Verbundpartikel nach Anspruch 1 als einen aktiven Bestandteil.

## Revendications

1. Particules composites d'oxyde de titane-nano-silice contenant du fluor comprenant un condensat d'un alcool contenant du fluor et d'un alcoxysilane, et des particules d'oxyde de titane et de nano-silice, dans lesquelles l'alcool contenant du fluor est représenté par la formule générale :
R_{F}'-A-OH [Ia]
ou la formule générale :
HO-A-R_{F}"-A-OH [Ib]
dans lesquelles R_{F}' est un groupe perfluoroalkyle linéaire ou ramifié contenant un groupe perfluoroalkyle terminal présentant 6 atomes de carbone ou moins et un groupe perfluoroalkylène présentant 6 atomes de carbone ou moins, et contenant un atome O, S ou N ; R_{F}" est un groupe perfluoroalkylène linéaire ou ramifié contenant un groupe perfluoroalkylène présentant 6 atomes de carbone ou moins, et contenant un atome O, S ou N ; et A est un groupe alkylène présentant 1 à 6 atomes de carbone.

2. Particules composites d'oxyde de titane-nano-silice contenant du fluor selon la revendication 1, dans lesquelles l'alcool contenant du fluor représenté par la formule générale [Ia] est un alcool d'oligomère d'oxyde d'hexafluoropropène représenté par la formule générale :
CₘF₂ₘ₊₁O[CF(CF₃)CF₂O]_{d}CF(CF₃)(CH₂)ₑOH [IIa]
dans laquelle m est un nombre entier allant de 1 à 3, d un nombre entier allant de 0 à 100, et e un nombre entier allant de 1 à 3.

3. Particules composites d'oxyde de titane-nano-silice contenant du fluor selon la revendication 1, dans lesquelles l'alcool contenant du fluor représenté par la formule générale [Ib] est un perfluoroalkylène éther diol représenté par la formule générale :
HO(CH₂)_{f}CF(CF₃)[OCF₂CF(CF₃)]_{g}O(CF₂)ₕO[CF(CF₃)CF₂O]ᵢCF(CF₃) (CH₂)_{f}OH [IIb]
dans laquelle f est un nombre entier allant de 1 à 3, g+i est un nombre entier allant de 0 à 50, et h est un nombre entier allant de 1 à 6.

4. Particules composites d'oxyde de titane-nano-silice contenant du fluor selon la revendication 1, dans lesquelles l'alcoxysilane est un dérivé de silane représenté par la formule générale :
(R₁O)ₚSi(OR₂)_{q}(R₃)ᵣ [IV]
dans laquelle R₁ et R₃ sont chacun un atome d'hydrogène, un groupe alkyle présentant 1 à 6 atomes de carbone ou un groupe aryle ; R₂ est un groupe alkyle présentant 1 à 6 atomes de carbone ou un groupe aryle, à condition que R₁, R₂ et R₃ ne soient pas tous des groupes aryle ; et p+q+r est 4, à condition que q ne soit pas 0.

5. Particules composites d'oxyde de titane-nano-silice contenant du fluor selon la revendication 1, dans lesquelles 10 à 200 parties en poids de particules de nano-silice, 10 à 200 parties en poids d'alcool contenant du fluor, et 10 à 200 parties en poids d'alcoxysilane sont utilisées sur la base de 100 parties en poids d'oxyde de titane.

6. Particules composites d'oxyde de titane-nano-silice contenant du fluor selon la revendication 1, dans lesquelles 50 à 150 parties en poids de particules de nano-silice, 50 à 150 parties en poids d'alcool contenant du fluor, et 50 à 150 parties en poids d'alcoxysilane sont utilisées sur la base de 100 parties en poids d'oxyde de titane.

7. Procédé de production de particules composites d'oxyde de titane-nano-silice contenant du fluor selon la revendication 1, le procédé comprenant la soumission de l'alcool contenant du fluor [Ia] ou [Ib] selon la revendication 1 et d'un alcoxysilane à une réaction de condensation en présence d'oxyde de titane et de particules de nano-silice en utilisant un catalyseur alcalin ou acide.

8. Agent de traitement de surface comprenant les particules composites d'oxyde de titane-nano-silice contenant du fluor selon la revendication 1 en tant qu'ingrédient actif.
